(19) **Europäisches Patentamt**

**European Patent Office**

**Office européen des brevets**

(11) **EP 1 095 500 B1**

(12) **EUROPEAN PATENT SPECIFICATION**

(45) Date of publication and mention
of the grant of the patent:
**31.05.2006 Bulletin 2006/22**

(51) Int Cl.:
*H04M 19/04* (2006.01)    *H04Q 7/32* (2006.01)

(21) Application number: **99930076.7**

(22) Date of filing: **07.06.1999**

(86) International application number:
**PCT/SE1999/000975**

(87) International publication number:
**WO 1999/065221 (16.12.1999 Gazette 1999/50)**

(54) **A TELECOMMUNICATION DEVICE WITH ACOUSTICALLY PROGRAMMABLE RINGTONE GENERATING MEANS AND A METHOD FOR THE PROGRAMMING THEREOF**

EIN TELEKOMMUNIKATIONSGERÄT MIT MITTELN ZUR ERZEUGUNG EINES AKUSTISCHEN PROGRAMMIERBAREN KLINGELTONS UND VERFAHREN ZUR PROGRAMMIERUNG DAVON

DISPOSITIF DE TELECOMMUNICATION DOTE D'UN MOYEN PERMETTANT DE GENERER DES TONALITES D'APPEL ACOUSTIQUEMENT PROGRAMMABLES ET PROCEDE DE PROGRAMMATION CORRESPONDANT

(84) Designated Contracting States:
**AT BE CH CY DE DK ES FI FR GB GR IE IT LI LU MC NL PT SE**

(30) Priority: **09.06.1998  SE 9802027**

(43) Date of publication of application:
**02.05.2001 Bulletin 2001/18**

(73) Proprietor: **TELEFONAKTIEBOLAGET LM ERICSSON (publ)**
**164 83 Stockholm (SE)**

(72) Inventor: **LINDGREN, Ulf, A.**
**S-226 49 Lund (SE)**

(74) Representative: **Andersson, Björn E.**
**Ström & Gulliksson AB,**
**P.O. Box 4188**
**203 13 Malmö (SE)**

(56) References cited:
**DE-A1- 19 526 220      DE-A1- 19 623 097**
**US-A- 5 655 016      US-A- 5 687 227**

## EP 1 095 500 B1

## Description

## Technical Field

The present invention relates to a telecommunication device having an acoustically programmable ringtone generator, a digital memory and an audio receiver. More specifically, the present invention is directed at providing an improved way of programming a ringtone pattern of the telecommunication device with improved sound quality and reduced memory space requirements.

## Description of the Prior Art

Telecommunication devices, e.g. mobile telephones, are generally provided with a ringtone generator for producing an audible sequence of ringtones so as to announce the occurrence of an incoming telephone call. The telephone is often provided with a set of prestored ringtone patterns, from which the user may select a particular pattern to be used when generating the audible sequence of ringtones following the detection of an incoming call. The user may switch between different ringtone patterns at his own desire, for instance for differentiating the ringtone pattern produced by his telephone from those produced by neighboring telephones.

In public areas, as the use of mobile telephones has increased rapidly during recent years, there is still an apparent risk of having more than one neighboring telephone producing the same ringtone pattern and causing confusion among users of telephones with identical ringtone patterns - "Is my telephone ringing or is it yours?"

By allowing the user to not only choose among a number of prestored ringtone patterns but also to create a fully customized ringtone pattern by programming the individual tones thereof, the differentiation between individual ringing telephones has been improved. US-A-4 866 766 relates to a telephone device incorporating a conventional keypad for allowing the user to program a customized ringtone pattern. A microprocessor unit receives a sequence of programming commands entered by the user on the keypad. The programming commands relate to various selections of ring parameters, such as ringtone, duration, delay between tones, etc. The entered ring parameters are stored by the microprocessor unit in a memory. The stored ring parameters are subsequently read from memory by the microprocessor unit and are used for controlling a ringtone generator to produce the audible customized ringtone pattern.

A telephone device like the one described in US-A-4 866 766 allows the user to program a fully customized and unique ringtone pattern, thereby reducing the risk of confusion between neighboring telephone users. However, the telephone device has a drawback in that the user is required to perform a large number of key pressings in order to specify all ring parameters for the desired ringtone pattern. Furthermore, it is well known that a keypad-based programming interface is prone to errors and mistakes, when the user accidentally presses another key than the intended one.

Alternative approaches for programming the ringtone pattern of a telephone are disclosed in US-A-5 687 227, DE-A-195 26 220 and US-A-5 655 016. These approaches involve the use of an analog/digital (A/D) converter and a digital signal processor (DSP), which are operatively connected to a microphone. A new ringtone pattern may be acoustically input by the user through the microphone. The acoustic input is sampled, converted into digital form and stored in a memory. Subsequently, this digitally stored ringtone pattern may be converted into analog signals and supplied to a speaker for announcing an incoming telephone call. While such an approach has an advantage in that it avoids the tricky programming through various key pressings according to the first prior art solution, it has a significant drawback in that the digital ringtone pattern stored in memory is essentially an exact representation of the original acoustic input. Therefore, since the acoustic input in reality will have a less than perfect quality, the ringtone pattern stored and used for announcing an incoming call will also have less than perfect quality. Furthermore, even if digital data compression is applied to the digital ringtone pattern stored in memory, these data still require a substantial amount of memory space.

## Summary of the Invention

It is an object of the present invention to provide an improved interface for acoustical programming of the ringtone pattern of a telecommunication device.

Generally speaking, this object may be achieved by the provision of a controller, which - rather than merely sampling and digitally storing the acoustic input - is arranged to extract, from the sampled acoustic input, a set of ringtone pattern parameters representing individual tones of the acoustic input. The set of ringtone pattern parameters will be subsequently used by the controller for controlling a ringtone generator or synthesizer to emulate the acoustic input. In other words, information related to desired portions of the acoustic input (i.e. tones, pauses, etc.) is extracted, while noise and other imperfections are not. Thereby, the acoustically programmed ringtone pattern undergoes an improvement in quality, so that the ringtone pattern generated by the controller and ringtone generator is in fact an improvement over the original acoustic input.

The object is achieved by a telecommunication device having acoustically programmable ringtone generating means; digital storage means; and an audio receiver; as well as means for producing tone-related digital parameters from sound received by said audio receiver, wherein the tone-related digital parameters are stored in the storage means; and controller means for controlling said ringtone generating means to generate a ringtone pattern in accordance with said tone-related parameters stored in said storage means.

The object is also achieved by a method of acoustically programming a ringtone pattern of a telecommunication device, comprising the steps of receiving an acoustic input and converting it into digital samples, extracting, from the digital samples, a set of digital parameters representing at least one ringtone of the ringtone pattern, storing the set of digital parameters, and using the set of stored digital parameters for controlling a ringtone generator to produce said ringtone pattern.

Other objects, features and advantages of the present invention are disclosed in the following detailed description, in the drawings as well as in the appended patent claims.

**Brief Description of the Drawings**

The present invention will now be described in more detail, reference being made to the accompanying drawings, in which:

FIG 1 is a schematic block diagram illustrating a telecommunication device with user programmable ringtone generating means according to the prior art,
FIG 2 is a schematic block diagram illustrating a telecommunication device with acoustically programmable ringtone generating means according to a preferred embodiment of the present invention,
FIGs 3 and 4 are plotted frequency diagrams for tracking three different tones,
FIG 5 is a spectrogram representing three different tones as a function of time,
FIG 6 is a real-life spectrogram representing a whistled melody, and
FIG 7 is a frequency diagram of the corresponding estimated tones for the whistled melody of FIG 6.

**Detailed Disclosure**

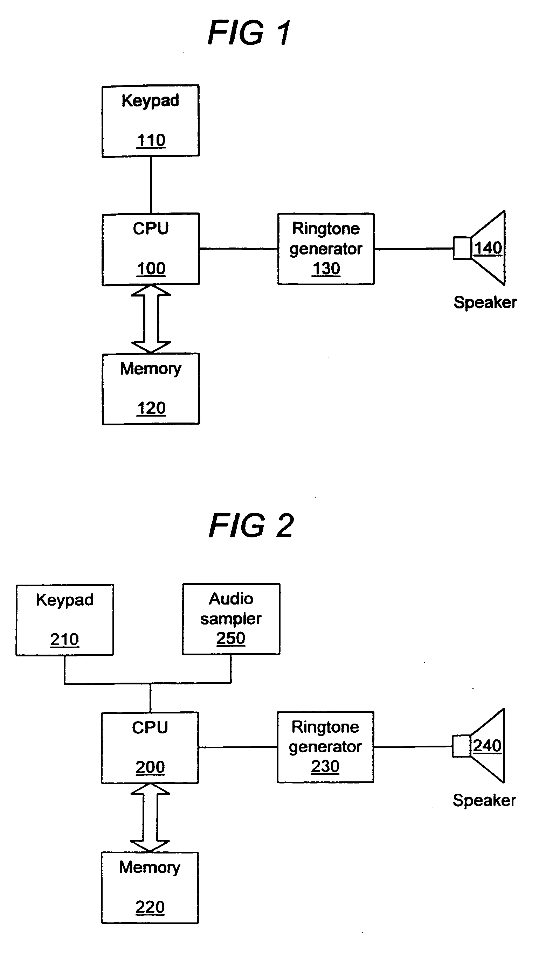

To better illustrate the novel features of the present invention, a schematic illustration of a prior art telecommunication device is given in FIG 1. The device comprises a processor (CPU) 100, which is operatively connected to a keypad 110 and a ringtone generator 130, which in turn is operatively connected to a speaker 140. Furthermore, the processor 100 is connected to an electronic memory 120 and is arranged to write data into the memory 120 as well as to read data from the memory. The processor 100 has a software routine for accepting ring parameters entered by the user on the keypad 110. When the user wants to program a customized ringtone pattern into the telecommunication device, he will use the keypad 110 to select a particular menu option presented on a display (not shown herein). In response the processor 100 enters a ringtone pattern programming mode, wherein the user will enter a sequence of ring parameters, such as tone (frequency), duration, etc, together forming the customized ringtone pattern, by repeatedly pressing keys on the keypad 110. After having completed the entering of ring parameters through the keypad 110, the user will execute an end command by e.g. pressing a specific key or selecting a particular menu option, wherein the processor 100 stores the entered ring parameters in the memory 120. The customized ringtone pattern programmed by the user is then played back in the following way whenever an incoming call is to be announced. The processor 100 detects the occurrence of an incoming call and starts reading the ring parameters stored in the memory 120. The ring parameters are processed and used by the processor 100 for controlling the ringtone generator 130, which is arranged to drive the speaker 140 to produce the customized ringtone pattern.

FIG 2 illustrates a telecommunication device with acoustically programmable ringtone functionality according to a preferred embodiment of the present invention. A controller in the form of a processor (CPU) 200 is operatively connected to a ringtone generator 230, which in turn is operatively connected to a speaker 240. Furthermore, the processor 200 is operatively connected to a memory 220. Contrary to the prior art arrangement of FIG 1 the present invention does not use a keypad 210 for entering the various ring parameters constituting the customized ringtone pattern of the telecommunication device. Instead, the processor 100 is operatively connected to an audio sampler 250, which is arranged to receive an acoustic signal from the user (e.g. in the form of a melody performed by whistling or playing a musical instrument), convert the acoustic signal to a corresponding electrical signal, sample this analog signal at predetermined intervals, convert the samples to digital values and extract tone-related digital parameters from the digital samples. In the preferred embodiment the audio sampler 250 is a Digital Signal Processor (DSP), but other audio sampling devices known per se may alternatively be used.

Consequently, the audio sampler 250 is arranged to process the sampled acoustic input sequence, so that enough information is extracted for subsequently controlling a ringtone generator or synthesizer to reproduce the acoustic input at at least the same quality as the quality of the original input. Contrary to previously known solutions, the audio sampler 250 of the preferred embodiment does not merely sample an acoustic input to be stored and subsequently played back to the user when announcing an incoming telephone call. Instead, the audio sampler 250 uses the sampled acoustic input to extract a set of tone related digital parameters, which are further described below.

The tone-related parameters relate to e.g. the frequency and duration of respective tones in the acoustical signal. Furthermore, the tone-related parameters may comprise "attack", "decay", "sustain" and "release" parameters for each tone as well as pauses between subsequent tones.

Once the audio sampler 250 has produced a complete set of tone-related parameters representing the acoustical input produced by the user, the processor 200 stores the tone-related digital parameters in its memory 220. This provides a further advantage as compared to previously known approaches; the tone-related digital parameters represent a much smaller data volume than the entire set of digital samples stored according to the prior art. Therefore, the inventive solution has a significant advantage also in terms of the amount of memory space required for storing a perfect representation of the ringtone pattern. The memory 220 is non-volatile and is therefore able to store the tone-related digital parameters for a long period of time.

When a ring signal is to be produced by the telephone, in response to the detection of an incoming telephone call, the processor 200 reads the tone-related digital parameters from the memory 220 and controls the ringtone generator 230 to produce a customized ringtone pattern, which is either essentially equal to the original acoustical input produced by the user (in case the acoustic input had perfect quality), or represents an improved version of the same. Hence, the present invention provides an opportunity for the user to program a fully customized, high-quality ringtone pattern acoustically rather than by entering a large number of programming commands on the keypad.

Consequently, instead of having to enter a large number of keybased input values related to the tone, duration, etc, of every ringtone comprised in the desired ringtone pattern, the user may simply start the programming session by e.g. selecting a particular menu option presented on the display, produce the desired ringtone pattern by e.g. whistling a short melody and complete the programming session by e.g. pressing a particular key on the keypad. Preferably, the telecommunication device has a playback option, which allows the user to select an appropriate menu option and listen to a customized ringtone pattern currently programmed into the memory 220. If the user is not fully satisfied with the customized ringtone pattern, he may simply reprogram it by starting the programming session again and reproducing the acoustical input signal (e.g. whistling the melody again).

As a further alternative, an option may be provided that allows the user to e.g. whistle the same melody a number of times, thereby increasing the certainty of the tone-related digital parameters. Assuming that the interpretation of the acoustic input, e.g. the set of tone-related digital parameters produced by the audio sampler 250, accidentally contains one or a few incorrect notes, then, by reentering a new version of the whistled melody, such ambiguities may be resolved.

According to one embodiment the telecommunication device is provided with a software routine for presenting, on the display, any of the customized ringtone patterns already programmed into the device in the form of a sequence of characters or graphical icons, which represent the individual tones of the ringtone pattern. Furthermore, the software routine is arranged to accept user commands, preferably entered through the keypad, for editing any of the individual tones, such as changing a "c" note to a "d", or changing the duration thereof. In this way the user will be able to quickly create a desired ringtone pattern acoustically and then perform a fine adjustment of individual tones by means of the keypad.

The acoustical input may be converted in a number of different ways into tone-related parameters in the form of a sequence of tones with corresponding duration and other related parameters. For a simple melody, comprised by a sequence of sinusoids of different frequencies and corresponding duration, two different frequency tracking methods are suggested and briefly discussed below.

A sinusoid signal, $x(n) = A\sin(\omega n + \psi)$, can be created digitally by the use of a second order Auto Regressive (AR) filter, i.e.

$$x(n) = a_1 x(n-1) - x(n-2),$$

where $a_1$ corresponds to *2cos($\omega$)*.

An interpretation of this expression is that the filter has a complex pole pair on the unit circle at the normalized frequency $f = \omega/(2\pi)$. The gain, A, of the sinusoid and the phase, $\psi$, are determined by the initial values of the above difference equation.

A first method of tracking the frequency of the sinusoid signal is to construct an adaptive Moving Average (MA) filter:

$$y(n) = x(n) - bx(n-1) + x(n-2),$$

where $b$ is computed from estimates of the correlation function of x($n$), i.e. $b = 2R_x(1)/R_x(0)$. This is the equivalent of placing two zeros on the unit circle at an angle close to $\omega$. The method is related to a second order predictor, but differs in that the zeros are forced to stay on the unit circle.

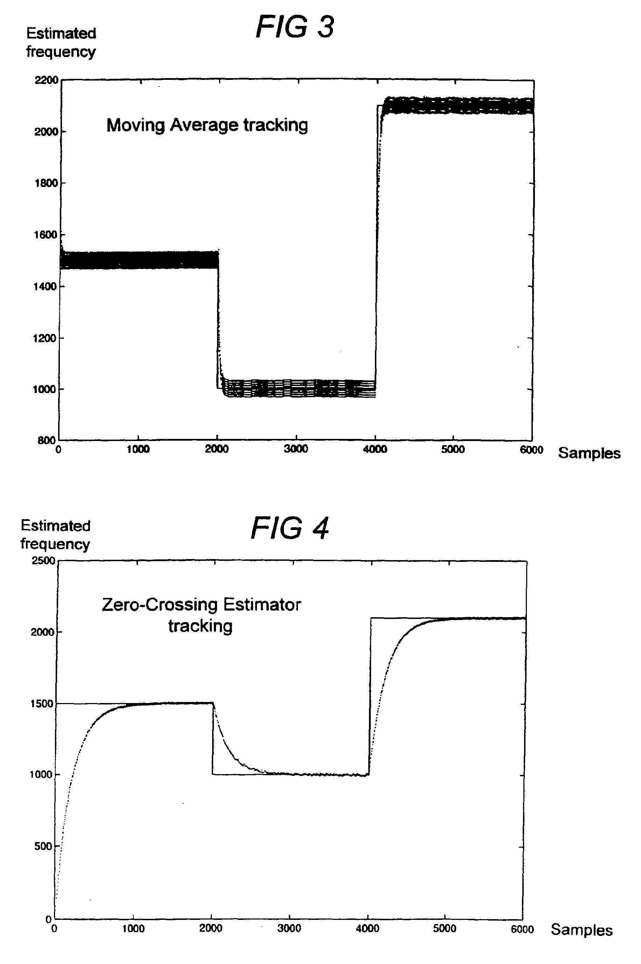

FIG 3 illustrates the results obtainable from the above MA frequency tracking method. The tracking of the frequency for three tones is illustrated in FIG 3, wherein the solid line represents the true frequency. No averaging of the angle has been made for the estimator illustrated in FIG 3. Averaging can be made in order to reduce the variance of the estimator at the expense, however, of slower tracking.

A second frequency tracking method operates by estimating the number of zero-crossings of the signal x(n). One possible zero-crossing estimator is:

$$f_{zc}(n) = (1-\varepsilon)f_{zc}(n-1) + 0.5\varepsilon|sign(x(n)) - sign(x(n-1))|,$$

where $\varepsilon$ is a constant. The contribution to $f_{zc}(n)$ in a sinusoid is a unit impulse train with frequency 2w. The constant $\varepsilon$ is used to average the impulse train over a number of samples. Hence, when the frequency increases, so does $f_{zc}(n)$. FIG 4 illustrates the frequency tracking results obtainable from the above zero-crossing estimator for three sinusoids with frequencies 1.5 kHz, 1 kHz and 2.1 kHz, respectively. The exponential slopes of the estimated frequency in FIG 4 is a function of $\varepsilon$. $\varepsilon$ is set to 0.005, which corresponds to approximately 400 samples. Naturally, this value may be tuned to allow faster tracking. However, the variance of the estimator will increase with an increase in $\varepsilon$.

According to an alternative embodiment, the tone-related digital parameters are generated by using a Fourier transform in the following way. Basically, a time-tone signal, x(n), containing the acoustical input melody, is divided into a number, M, of consecutive segments. Each segment consists of N consecutive samples and is Fourier transformed, i.e.

$$X(k,m) = \sum_{n=0}^{N-1} w(n)x(n+mN)e^{\frac{2j\pi kn}{N}},$$

where w(n) is a data window, m is a segment number and k is a frequency bin, respectively. This can be used to determine the spectral content of the time-tone signal, for example by using the frequency magnitude. A spectrogram is obtained by plotting the Fourier transformed segments as a function of time (segment number). From the spectrogram it is possible to determine the frequency and duration of the respective tones.

However, there is a trade-off between frequency resolution and time resolution. This means that in order to obtain higher time resolution, a reduction in frequency resolution will be the result.

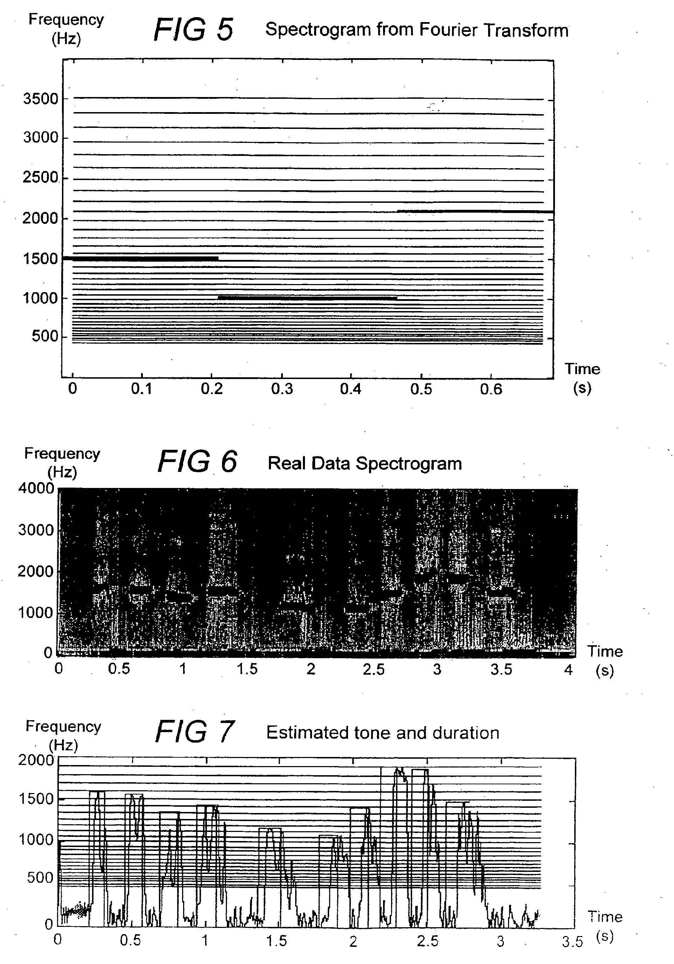

In FIG 5 a spectrogram is depicted for the same three exemplary tones as in FIGs 3 and 4. The black horizontal lines correspond to the tones in the chromatic scale. In FIG 6 a spectrogram of a real-life data sequence is illustrated, and the corresponding estimated tones are illustrated as a function of time in FIG 7. The rectangle surrounding a respective peak corresponds to a particular tone, and the width of the rectangle is the duration.

It will be readily realized by a man skilled in the field of digital signal processing that the two frequency tracking methods and the Fourier transform method summarized above may be replaced by other methods known per se. Consequently, any appropriate transforming methods may be used, such as Discrete Fourier Transform (DFT), Fast Fourier Transform (FFT), Wavelett transforms, etc. Alternatively, filter banks and models may be used, i.e. the approach of adapting sample data to a mathematical model of a process or signal and extracting parameters related to e.g. the fundamental frequency from this mathematical model. Models may be estimated by e.g. prediction, instrumental variables, system of equations, etc. In the context of the present invention, a filter bank is a set of filters, which are arranged to filter input data in parallel and select the signal with the highest energy contents.

It is also appreciated that the device and method according to the preferred invention may be applied also for programming more advanced ringtone patterns. Therefore, the scope of the present invention is in no way limited by the examples above but is best defined by the appended independent patent claims.

Furthermore, although being illustrated as separate components, any of the processor/controller 200, memory 220, ringtone generator 230 and audio sampler 250 may be combined into an integrated component.

**Claims**

1. A telecommunication device having acoustically programmable ringtone generating means (230, 240), digital storage means (220) and means (250) arranged to sample an analog audio signal, corresponding to an acoustic input from a user, and arranged to, in response to the sampled analog audio signal, generate a digital audio signal **characterized by**
said means (250) further arranged to identify individual tones in the digital audio signal and arranged to produce tone-related parameters, wherein said parameters represent the identified individual tones and are stored in the storage means (220), and
controller means (200) arranged to control the ringtone generating means (230, 240) to generate a ringtone pattern in accordance with the tone-related parameters stored in the storage means (220), wherein the ringtone pattern comprises the identified individual tones.

2. A telecommunication device according to claim 1, wherein said means (250) arranged to identify individual tones and arranged to produce tone-related parameters comprises a Digital Signal Processor, DSP.

3. A telecommunication device according to claim 1 or 2, wherein said tone-related parameters at least relate to the frequency and duration of said individual tones.

4. A telecommunication device according to any preceding claim, wherein the device is a portable radio telephone.

5. A telecommunication device according to any preceding claim, wherein any of said ringtone generating means (230, 240), said means (250) arranged to sample an analog audio signal and to generate a digital audio signal, said means (250) arranged to identify individual tones and arranged to produce tone-related parameters, said storage means (220) and said controller means (200) are integrated into one component.

6. A method of acoustically programming a ringtone pattern of a telecommunication device, wherein an acoustic input is sampled and converted into a digital audio signal, **characterized by** the steps of
identifying individual tones in the digital audio signal;
producing tone-related parameters to represent the identified individual tones; and
storing the tone-related parameters,
the tone-related parameters being capable of subsequent control of a ringtone generator, so that a ringtone pattern comprising the individual tones is generated.

7. A method according to claim 6, wherein said tone-related parameters are obtained by a Moving Average, MA, frequency tracking method.

8. A method according to claim 6, wherein said tone-related parameters are obtained by a zero-crossing estimator frequency tracking method.

9. A method according to claim 6, wherein said tone-related parameters are obtained by a Fourier transforming method.

10. A method according to any of claims 6-9, further comprising the steps of
presenting a graphical representation of said tone-related parameters and
allowing a user to edit any value of said tone-related parameters.

**Patentansprüche**

1. Telekommunikationsgerät mit einem akustisch programmierbaren Klingeltonerzeugungsmittel (230, 240), einem digitalen Speichermittel (220) und einem Mittel (250), das dafür konfiguriert ist, ein analoges Audiosignal abzutasten, das einer akustischen Eingabe von einem Benutzer entspricht, und das dafür konfiguriert ist, in Reaktion auf das abgetastete analoge Audiosignal ein digitales Audiosignal zu erzeugen, **dadurch gekennzeichnet, dass**
das Mittel (250) des Weiteren dafür konfiguriert ist, einzelne Töne in dem digitalen Audiosignal zu identifizieren, und dafür konfiguriert ist, tonbezogene Parameter zu erzeugen, wobei diese Parameter die identifizierten einzelnen Töne darstellen und in dem Speichermittel (220) gespeichert werden, und
ein Steuerungsmittel (200), das dafür konfiguriert ist, das Klingeltonerzeugungsmittel (230, 240) so zu steuern, dass entsprechend den tonbezogenen Parametern, die in dem Speichermittel (220) gespeichert sind, ein Klingeltonmuster erzeugt wird, wobei das Klingeltonmuster die identifizierten einzelnen Töne umfasst.

2. Telekommunikationsgerät nach Anspruch 1, wobei das Mittel (250), das dafür konfiguriert ist, einzelne Töne zu identifizieren, und dafür konfiguriert ist, tonbezogene Parameter zu erzeugen, einen digitalen Signalprozessor umfasst.

3. Telekommunikationsgerät nach Anspruch 1 oder 2, wobei die sich tonbezogenen Parameter wenigstens auf die Frequenz und die Dauer der einzelnen Töne beziehen.

4. Telekommunikationsgerät nach einem der vorangehenden Ansprüche, wobei es sich bei dem Gerät um ein tragbares Mobiltelefon handelt.

5. Telekommunikationsgerät nach einem der vorangehenden Ansprüche, wobei das Klingeltonerzeugungsmittel (230, 240), das Mittel (250), das dafür konfiguriert ist, ein analoges Audiosignal abzutasten und ein digitales Audiosignal zu erzeugen, das Mittel (250), das dafür konfiguriert ist, einzelne Töne zu identifizieren, und dafür konfiguriert ist, tonbezogene Parameter zu erzeugen, das Speichermittel (220) und das Steuerungsmittel (200) alle in einer einzelnen Komponente integriert sind.

6. Verfahren zur akustischen Programmierung eines Klingeltonmusters eines Telekommunikationsgerätes, wobei eine akustische Eingabe abgetastet und in ein digitales Audiosignal umgewandelt wird, **gekennzeichnet durch** folgende Schritte:

   Identifizieren einzelner Töne in dem digitalen Audiosignal;
   Erzeugen tonbezogener Parameter zur Darstellung der identifizierten einzelnen Töne; und
   Speichern der tonbezogenen Parameter,

   wobei die tonbezogenen Parameter zur anschließenden Steuerung eines Klingeltongenerators befähigt sind, dergestalt, dass ein Klingeltonmuster, das die einzelnen Töne umfasst, erzeugt wird.

7. Verfahren nach Anspruch 6, wobei die tonbezogenen Parameter mit Hilfe eines Frequenzverfolgungsverfahrens mit gleitender Durchschnittsbildung erhalten werden.

8. Verfahren nach Anspruch 6, wobei die tonbezogenen Parameter mit Hilfe eines Frequenzverfolgungsverfahrens mit Nullkreuzungs-Schätzfunktion erhalten werden.

9. Verfahren nach Anspruch 6, wobei die tonbezogenen Parameter mit Hilfe eines Fourierumwandlungsverfahrens erhalten werden.

10. Verfahren nach einem der Ansprüche 6-9, das des Weiteren die Schritte enthält:

    eine grafische Darstellung der tonbezogenen Parameter darzubieten; und
    es einem Benutzer zu gestatten, beliebige Werte der tonbezogenen Parameter zu bearbeiten.

**Revendications**

1. Dispositif de télécommunication possédant un moyen de production de tonalités de sonnerie programmable acoustiquement (230, 240), un moyen de stockage numérique (220) et un moyen (250) agencé pour échantillonner un signal audio analogique, correspondant à une entrée acoustique provenant de l'utilisateur et pour, en réponse au signal audio analogique échantillonné, produire un signal audio numérique, **caractérisé par :**

   **le fait que** ledit moyen (250) est en outre agencé pour identifier des tonalités individuelles dans le signal audio numérique et agencé pour produire des paramètres liés aux tonalités, lesdits paramètres représentant les tonalités individuelles identifiées et étant stockés dans le moyen de stockage (220), et
   un moyen contrôleur (200) agencé pour commander le moyen de production de tonalités de sonnerie (230, 240) afin de produire un motif de tonalités de sonnerie en fonction des paramètres liés aux tonalités stockés dans le moyen de stockage (220), le motif de tonalités de sonnerie comprenant les tonalités individuelles identifiées.

**2.** Dispositif de télécommunication selon la revendication 1, dans lequel ledit moyen (250) agencé pour identifier des tonalités individuelles et agencé pour produire des paramètres liés aux tonalités comprend un processeur de signal numérique DSP.

**3.** Dispositif de télécommunication selon la revendication 1 ou 2, dans lequel lesdits paramètres liés aux tonalités sont au moins liés à la fréquence et à la durée desdites tonalités individuelles.

**4.** Dispositif de télécommunication selon l'une quelconque des revendications précédentes, dans lequel le dispositif est un radiotéléphone portable.

**5.** Dispositif de télécommunication selon l'une quelconque des revendications précédentes, dans lequel chacun desdits moyens de production de tonalités de sonnerie (230, 240), ledit moyen (250) agencé pour échantillonner un signal audio analogique et pour produire un signal audio numérique, ledit moyen (250) agencé pour identifier des tonalités individuelles et agencé pour produire des paramètres liés aux tonalités, ledit moyen de stockage (220) et le dit moyen contrôleur (200) sont intégrés dans un composant unique.

**6.** Procédé de programmation acoustique d'un motif de tonalités de sonnerie d'un dispositif de télécommunication, dans lequel une entrée acoustique est échantillonnée et convertie en un signal audio numérique, **caractérisé par** les étapes consistant à :

identifier des tonalités individuelles dans le signal audio numérique ;
produire des paramètres liés aux tonalités pour représenter les tonalités individuelles identifiées ; et
stocker les paramètres liés aux tonalités,
les paramètres liés aux tonalités étant en mesure de commander par la suite un générateur de tonalités de sonnerie afin de produire un motif de tonalités de sonnerie comprenant les tonalités individuelles.

**7.** Procédé selon la revendication 6, dans lequel lesdits paramètres liés aux tonalités sont obtenus par un procédé de suivi des fréquences à moyenne glissante.

**8.** Procédé selon la revendication 6, dans lequel lesdits paramètres liés aux tonalités sont obtenus par un procédé de suivi des fréquences avec estimation du passage par zéro.

**9.** Procédé selon la revendication 6, dans lequel lesdits paramètres liés aux tonalités sont obtenus par un procédé de transformation de Fourier.

**10.** Procédé selon l'une quelconque des revendications 6 à 9, comprenant en outre les étapes consistant à :

présenter une représentation graphique desdits paramètres liés aux tonalités, et
permettre à un utilisateur d'éditer toutes les valeurs desdits paramètres liés aux tonalités.

## FIG 1

```
           ┌──────────┐
           │  Keypad  │
           │          │
           │   110    │
           └────┬─────┘
                │
                │
   ┌──────────┐ │   ┌────────────┐        ┌────┐
   │   CPU    ├─┘   │  Ringtone  │        │▢140│
   │          ├─────┤ generator  ├────────┤   ╱
   │   100    │     │    130     │        │  ╱
   └────┬─────┘     └────────────┘        └─╱
        ↕                                  Speaker
   ┌──────────┐
   │  Memory  │
   │          │
   │   120    │
   └──────────┘
```

## FIG 2

```
   ┌──────────┐   ┌──────────┐
   │  Keypad  │   │  Audio   │
   │          │   │ sampler  │
   │   210    │   │   250    │
   └────┬─────┘   └────┬─────┘
        │              │
        └──────┬───────┘
               │
        ┌──────┴───┐     ┌────────────┐       ┌────┐
        │   CPU    │     │  Ringtone  │       │▢240│
        │          ├─────┤ generator  ├───────┤   ╱
        │   200    │     │    230     │       │  ╱
        └────┬─────┘     └────────────┘       └─╱
             ↕                                 Speaker
        ┌──────────┐
        │  Memory  │
        │          │
        │   220    │
        └──────────┘
```

FIG 3

Estimated
frequency

Moving Average tracking

FIG 4

Estimated
frequency

Zero-Crossing Estimator
tracking

FIG 5 Spectrogram from Fourier Transform

FIG 6 Real Data Spectrogram

FIG 7 Estimated tone and duration